# EUROPÄISCHE PATENTSCHRIFT

(11) **EP 1 747 421 B1**
(45) Veröffentlichungstag und Bekanntmachung des Hinweises auf die Patenterteilung: **10.10.2018**
(21) Anmeldenummer: 05734876.5
(22) Anmeldetag: 08.04.2005
(51) Int. Cl.: H04N 1/028, H04N 1/195

(54) **VERFAHREN UND VORRICHTUNG ZUR OPTISCHEN ABTASTUNG EINER PROBE**
METHOD AND DEVICE FOR OPTICALLY SCANNING A SAMPLE
PROCEDE ET DISPOSITIF POUR EXPLORER OPTIQUEMENT UN ECHANTILLON

(30) Priorität: 17.05.2004 DE 102004024810
(43) Veröffentlichungstag der Anmeldung: 31.01.2007
(73) Patentinhaber: Olympus Soft Imaging Solutions GmbH, 48149 Münster (DE)
(72) Erfinder: TÜMPNER, Jürgen, 48167 Münster (DE)
(74) Vertreter: Nunnenkamp, Jörg
(86) Internationale Anmeldenummer: PCT/EP2005/003714
(87) Internationale Veröffentlichungsnummer: WO 2005/114093

(56) Entgegenhaltungen:
- US-A- 4 760 385
- US-A- 5 323 003
- US-A- 5 825 670
- US-A1- 2001 030 286

## Beschreibung

Die Erfindung betrifft ein Verfahren zur optischen Abtastung einer Probe mittels wenigstens einer Verstelleinheit mit Antriebsvorrichtung sowie Probentisch und einer Abtasteinrichtung, wobei unterhalb des Probentisches eine Weißlichtquelle angeordnet wird und die Probe durchleuchtet, so dass das Bild der Probe von der darüber angeordneten Abtasteinrichtung aufgenommen wird, wonach die Probe mit Hilfe der von einer Steueranlage beaufschlagten Verstelleinheit gegenüber der Abtasteinrichtung bewegt wird, oder umgekehrt, und wonach mit Hilfe der Abtasteinrichtung Einzelbilder der Probe aufgenommen und im Anschluss daran in der Steueranlage zu einem Gesamtbild zusammengesetzt werden. Das heißt, anstelle die Probe mittels der Verstelleinheit inklusive Steueranlage gegenüber der Abtasteinrichtung zu bewegen, kann genauso gut die Abtasteinrichtung mit der Verstelleinheit (durch die Steueranlage) im Vergleich zu der Probe eine Bewegung erfahren.

Ein Verfahren zur optischen Abtastung einer Probe wird beispielsweise im Rahmen der US-PS 4,760,385 oder auch der US-PS 4,673,988 beschrieben. Üblicherweise werden mit Hilfe der Abtasteinrichtung Einzelbilder der Probe aufgenommen und im Anschluss daran in der Steueranlage zu einem Gesamtbild zusammengesetzt. Dabei können die Einzelbilder mit Überlapp oder Stoß an Stoß zu dem Gesamtbild zusammengesetzt werden. Das Gesamtbild stellt also ein Raster der Einzelbilder dar bzw. setzt sich aus einem solchen zusammen.

Zur Lösung dieser technischen Problemstellung ist ein gattungsgemäßes Verfahren zur optischen Abtastung einer Probe nach Anspruch 1 vorgesehen. Die Korrekturwerte kommen also bspw. immer dann ins Spiel, wenn mit Hilfe der Verstelleinheit eine bestimmte Position der Probe angefahren werden soll, um ein Einzelbild aufzunehmen. Denn zu dieser gewünschten Position der Probe korrespondiert ein zuvor ermittelter Korrekturwert, welcher bei dem betreffenden Stellvorgang und dem daraus resultierenden Stellweg erfindungsgemäß nunmehr Berücksichtigung findet. Dabei kann die Verstelleinheit (inklusive der sie steuernden Steueranlage) - wie eingangs bereits angegeben - entweder die Probe oder die Abtasteinrichtung oder beide beaufschlagen. D. h., grundsätzlich sind sogar zwei Verstelleinheiten denkbar, einerseits für die Probe und andererseits für die Abtasteinrichtung, die beide von einer gemeinsamen Steueranlage oder von jeweils getrennten Steueranlagen beaufschlagt werden. In der Regel wird man jedoch die optische Abtasteinrichtung stationär belassen, wohingegen die Probe mit Hilfe der Verstelleinheit verfahren wird.

Zu diesem Zweck wird die Probe in der Regel von einem Probentisch aufgenommen, welcher mit Hilfe der Verstelleinheit eine Bewegung in einer Richtung (beispielsweise in X-Richtung), in zwei Richtungen (d. h. in X- und Y-Richtung) oder sogar eine räumliche Bewegung (in X-, Y- und Z-Richtung) erfährt. Jedenfalls sorgt die Verstelleinheit mit einer zugehörigen Antriebsvorrichtung dafür, dass die Probe gegenüber der zumeist feststehenden Abtasteinrichtung bewegt wird, so dass die gewünschten Einzelbilder sukzessive aufgenommen werden können. Wie beschrieben, werden die Einzelbilder in der Steueranlage direkt und/oder auch ggf. nach einem Datentransfer an einem entfernten Ort in einer (anderen) Steueranlage zu dem gewünschten Gesamtbild der Probe zusammengesetzt. Dabei kommt jedem Einzelbild eine vorgegebene Rasterposition im Gesamtbild zu.

Um nun bei diesem Vorgang mechanische Ungenauigkeiten auszugleichen, werden entweder werksseitig vor der eigentlichen Inbetriebnahme einer Vorrichtung oder auch vor oder bei jedem einzelnen Messvorgang die Korrekturwerte aufgenommen und in der zugehörigen Steueranlage abgelegt. Diese Korrekturwerte berücksichtigen beispielsweise Fehler, die sich daraus ergeben können, dass die der Verstelleinheit zugeordnete Antriebsvorrichtung üblicherweise über einen oder mehrere Spindelantriebe bzw. Spindeltriebe mit unvermeidlichem Spiel verfügt. Ein solcher Spindelantrieb besitzt immer dieses nicht zu verhindernde Spiel, welches zudem von der Position einer auf der Spindel bewegten Mutter und damit des daran angeschlossenen Probentisches abhängt.

Außerdem treten geschwindigkeitsabhängige mechanische Fehler auf, die unterschiedlich sind, je nach dem wie schnell der Probentisch und mit ihm die Mutter auf der zugehörigen Spindel bewegt wird. Neben diesen dem in der Regel eingesetzten Spindelantrieb in der Antriebsvorrichtung inhärenten mechanischen Spiel müssen weitere mechanische Ungenauigkeiten berücksichtigt werden.

So kann beispielsweise bei zwei rechtwinklig zueinander angeordneten Spindeltrieben zur Realisierung einer X- und Y-Verstellung des Probentisches nicht ausgeschlossen werden, dass Abweichungen von der Rechtwinkligkeit (Orthogonalitätsfehler) gegeben sind bzw. vorliegen. Auch diese Winkelfehler tragen wie die zuvor beschriebenen Ungenauigkeiten dazu bei, dass Probleme beim Zusammensetzen der Einzelbilder zu dem Gesamtbild auftreten können.

Neben diesen Orthogonalitätsfehlern sind ergänzend noch Rotationsfehler zu berücksichtigen, die dadurch entstehen können, dass beispielsweise mit unterschiedlichen Mikroskopobjektiven im Rahmen der Abtasteinrichtung gearbeitet wird, die in einem zugehörigen Objektivrevolver aufgenommen werden. Beim Verstellen dieses Objektivrevolvers bzw. beim Wechseln von einem zum anderen Objektiv ändert sich unter Umständen die Lage des aufgenommenen Einzelbildes im Vergleich zu einem Sensor bzw. Flächensensor in der Abtasteinrichtung, was ebenfalls zu korrigieren ist.

Schließlich haben auch noch andere Einflussgrößen, wie z. B. das Gewicht des Probentisches (bei auswechselbaren Probentischen sowie unterschiedlichen Probengewichten), die Temperatur am Aufstellungsort etc. ggf. Einfluss auf die "Position" des Einzelbildes im Raster des Gesamtbildes. Diese gesamten Fehler eliminiert die Erfindung. D. h., bei einer nach dem beschriebenen Verfahren arbeitenden Vorrichtung zur optischen Abtastung einer Probe wird so vorgegangen, dass die vorgenannten Korrekturwerte aufgenommen sowie in der Steueranlage abgelegt und beim Stellvorgang berücksichtigt werden, um die mechanischen Unzulänglichkeiten auszugleichen.

Denn um die beschriebenen Korrekturwerte aufnehmen und ermitteln zu können, wird zumindest eine Referenzprobe in Gestalt der Maske abgetastet, bei welcher es sich vorteilhaft um eine sogenannte Lithografiemaske mit den definierten Markierungen handeln kann. Solche Lithografiemasken werden bei der Herstellung von Halbleiterbauelementen eingesetzt und dienen dazu, die gewünschten Strukturen im Silizium-Wafer zu erzeugen. Dazu wird eine solche Lithografiemaske mit kurzwelligem Licht bestrahlt und führt auf dem solchermaßen abgedeckten Silizium-Wafer dazu, dass nur von der Maske freigegebene Bereiche des mit einem Fotolack beschichteten Silizium-Wafers eine Belichtung erfahren. Mit Hilfe solcher Lithografiemasken lassen sich in der Halbleitertechnologie Submicronstrukturen definieren.

Bei Verwendung derartiger Lithografiemasken im Rahmen der Erfindung ist folglich mit Positionsgenauigkeiten von ca. 1 µm zu rechnen. Jedenfalls verfügt die betreffende Maske über definierte Markierungen in einem festgelegten Koordinatensystem der Maske, deren Lage (unter Berücksichtigung der vorgenannten Genauigkeitswerte) folglich in der X-/Y-Ebene und damit im Raster des Gesamtbildes eindeutig festliegt. Selbstverständlich ist es an dieser Stelle auch möglich, mit einer dreidimensionalen Maske zu arbeiten, die darüber hinaus noch über Markierungen nicht nur in X- und Y-Ebene, sondern auch in Z-Richtung verfügt.

Üblicherweise kommt jedoch eine Maske mit definierten Markierungen in der X-/Y-Ebene zum Einsatz. Die Lage dieser Markierungen im Vergleich zu einer Referenzlinie bzw. einer Maskenbegrenzung und folglich dem Koordinatensystem der Maske liegt dementsprechend fest. Bei einer Abbildung der Maske müssen sich die Markierungen an den definierten Positionen im Einzelbild und folglich auch im Raster des Gesamtbildes wiederfinden.

Wenn nun die Verstelleinheit bewegt wird, so können aus Abweichungen der theoretischen von der tatsächlichen Position der Markierungen Korrekturwerte abgeleitet werden. Beispielsweise mag eine erste Markierung die Position 50 µm; 50 µm für die X-/Y-Werte im Vergleich zu einem Referenznullpunkt (Koordinatenursprung) der Maske haben. Um nun diese Markierung beispielsweise in die Bildmitte eines Einzelbildes zu befördern, mag sich herausstellen, dass die Verstelleinheit beispielsweise in X-Richtung lediglich 49 µm bewegt werden muss, dagegen in Y-Richtung eine Verstellung um 45 µm erforderlich ist. Daraus resultierend ergibt sich ein X-/Y-Korrekturwert für diesen Rasterpunkt im Gesamtbild von (-1 µm; -5 µm). Dieser Korrekturwert wird folglich am X-/Y-Rasterpunkt (50 µm; 50 µm) abgelegt.

Wenn folglich eine Position X/Y (50 µm; 50 µm) im Koordinatensystem des Gesamtbildes angefahren werden soll, d. h., dass sich diese Position in der Bildmitte des aufzunehmenden Einzelbildes befindet, wird die Steueranlage die Verstelleinheit unter Berücksichtigung des Korrekturwertes ansteuern. D. h., die Verstelleinheit wird in X-Richtung nicht um 50 µm, sondern um 50 µm -1 µm bewegt und erfährt in Y-Richtung eine Verstellung um 50 µm -5 µm, d. h. um 45 µm. Zuvor müssen jedoch die Koordinatensysteme von einerseits der Maske und andererseits dem Gesamtbild (und dementsprechend auch der jeweiligen Einzelbilder) in Deckung gebracht werden. Üblicherweise wird man das Koordinatensystem der Maske auch als Koordinatensystem für das Gesamtbild nutzen.

In gleicher Weise wie zuvor beschrieben können nun Korrekturwerte für das Gesamtbild ermittelt und in der Steueranlage abgespeichert werden. Dabei wird man in der Regel so vorgehen, dass ein zentraler Korrekturwert je Einzelbild erfasst wird. Mit anderen Worten empfiehlt es sich, im Koordinatensystem des Gesamtbildes (welches meistens demjenigen der Maske entspricht) jeweils die Bildmitten der einzelnen aufzunehmenden Einzelbilder anzufahren und mit Hilfe der Maske dann zugehörige Korrekturwerte zu erfassen und in der Steueranlage abzulegen.

D. h., wenn das Gesamtbild aus beispielsweise 100 Einzelbildern zusammengesetzt ist, so müssen meistens 100 Korrekturwerte jeweils im Zentrum der Einzelbilder im Rahmen der beschriebenen Kalibrierung erfasst und abgespeichert werden. Mit Hilfe dieser Korrekturwerte kann dann die Verstelleinheit beim Anfahren und der Aufnahme des jeweiligen Einzelbildes in ihrer zugehörigen Position korrigiert werden.

In diesem Zusammenhang versteht es sich, dass die Korrekturwerte in der Regel in einer ein- oder mehrdimensionalen Korrekturmatrix abgelegt werden. Im Beispielfall mit 100 Einzelbildern würde man von einer 10x10-Matrix ausgehen, sofern das Gesamtbild quadratisch aufgebaut ist. Jeder einzelne Korrekturwert dieser Korrekturmatrix verfügt nun seinerseits über die entsprechenden Korrektureinzelwerte für die Korrektur in X-, Y- sowie ggf. Z-Richtung.

Es besteht die Möglichkeit, die Korrekturwerte nur einmalig mit Hilfe der Maske bzw. Probenmaske bei einer fest vorgegebenen Geschwindigkeit der Verstelleinheit bzw. der zugehörigen Antriebsvorrichtung zu erfassen. Genauso gut können aber auch mehrere Korrekturwerte in Abhängigkeit von der Geschwindigkeit und/oder der Richtung der beschriebenen Antriebsvorrichtung für die Verstelleinheit erfasst und ein oder mehrere geschwindigkeitsabhängige und/oder richtungsabhängige Korrekturmatrizen aufgenommen werden. D. h., in diesem Fall würde beispielsweise eine 10x10-Korrekturmatrix ermittelt und abgelegt werden, die zu einer Verstellgeschwindigkeit der Antriebsvorrichtung bzw. der in der Regel zugehörigen Spindelantriebe von vielleicht 10 mm/sec korrespondiert. Darüber hinaus ließe sich noch eine zweite Korrekturmatrix in der gleichen Art und Weise aufnehmen und abspeichern, die zu einer doppelten Verstellgeschwindigkeit von 20 mm/sec gehört. Ebenso können unterschiedliche Korrekturmatrizen definiert werden, und zwar je nach dem, ob beispielsweise der Spindeltrieb für die X-Richtung zunehmende X-Werte oder abnehmende X-Werte anfährt. Das gleiche gilt für den Spindeltrieb in Y-Richtung sowie ggf. in Z-Richtung. Dadurch wird eine Vielzahl an Korrekturmatrizen gewonnen, und zwar jeweils in Abhängigkeit von der Geschwindigkeit und/oder der Richtung der Antriebsvorrichtung für die Verstelleinheit.

Einleitend ist bereits darauf hingewiesen worden, dass die Abtasteinrichtung mit mehreren Abbildungs- und/oder Aufzeichnungseinheiten ausgerüstet sein kann. Bei dieser Aufzeichnungseinheit bzw. einem zugehörigen Sensor oder Flächensensor mag es sich nicht einschränkend um einen CCD (charge coupled device)-Chip handeln. Dieses Halbleiterbauelement besteht bekanntermaßen aus vielen schachbrettartig angeordneten Zellen bzw. Pixeln. Der betreffende Chip befindet sich dabei an der Stelle, wo sonst die Filmebene bei einer fotographischen Aufnahme der Probe angeordnet ist. Unter Lichteinwirkung einer unterhalb der Probe bzw. des Probentisches angeordneten Lichtquelle sammeln sich Elektronen in den Zellen des CCD-Chips, wobei die Zahl der Elektronen ein Maß für die Dauer und Intensität des eingefallenen Lichtes ist. Die Zellen bzw. Pixel lassen sich auslesen und die jeweilige Anzahl der Elektronen wird gezählt. Dadurch kann jedem einzelnen Pixel ein bestimmter Helligkeitswert zugemessen werden. In Verbindung mit den bekannten Koordinaten der Pixel lässt sich aus diesen Werten das gewünschte digitalisierte Bild in der Steueranlage berechnen und zusammensetzen.

Im Rahmen der Erfindung besteht nun die Option, beispielsweise die Aufzeichnungseinheit bzw. den CCD-Chip stationär beizubehalten und die Vergrößerung und folglich den Probenausschnitt zu verändern, in dem eine andere Abbildungseinheit zum Einsatz kommt. Dazu verfügt die Abtasteinrichtung über zumindest ein Mikroskopobjektiv bzw. mehrere Mikroskopobjektive, die in einem Objektivrevolver aufgenommen werden. Durch Drehen des Objektivrevolvers kann das gewünschte Mikroskopobjektiv und damit die ausgewählte Abbildungseinheit zum Einsatz kommen. Das geschieht entweder manuell oder gesteuert von der Steueranlage.

Nun ist es möglich, dass der Wechsel von einem zum anderen Mikroskopobjektiv die Lage des Bildes von der Probe im Vergleich zur Aufzeichnungseinheit bzw. dem CCD-Chip geringfügig ändert. Um diese Änderung zu erfassen, können wiederum Korrekturwerte aufgenommen werden, und zwar für jede Abbildungseinheit bzw. jedes Mikroskopobjektiv getrennt. Neben den ggf. geschwindigkeits- und/oder richtungsabhängigen Korrekturmatrizen werden also ergänzend solche aufgenommen, die als weiteren Parameter zu einer bestimmten Abbildungseinheit bzw. einem vorgegebenem Mikroskopobjektiv korrespondieren.

Im Detail lässt sich eine Abweichung von Abbildungseinheit bzw. Mikroskopobjektiv zur Abbildungseinheit beispielsweise dadurch feststellen und ausgleichen, dass wiederum die Bildmitte des aufzunehmenden oder aufgenommenen Einzelbildes mit einem bestimmten X/Y-Wert identifiziert wird (welcher ggf. bereits eine Korrektur durch Korrekturwerte der Verstelleinheit für den Probentisch erfahren hat, was jedoch nicht zwingend ist). Ändert sich nun die Position der Bildmitte beim Wechsel auf eine andere Abbildungseinheit bzw. ein anderes Mikroskopobjektiv, so kann mit Hilfe der Maske die Abweichung der "neuen" Bildmitte gegenüber der alten oder ursprünglichen Bildmitte erfasst werden und mündet in einen zugehörigen Korrekturwert für die "neue" Abbildungseinheit im Vergleich zu der ursprünglichen Abbildungseinheit. Im Beispielfall mit den X/Y-Koordinaten (50 µm; 50 µm) in der Bildmitte mag sich hieraus ein Korrekturwert von (-3 µm; +2 µm) ergeben. D. h., beim Wechsel von der "alten" auf die "neue" Abbildungseinheit wird in Wirklichkeit die Position (47 µm; 52 µm) und nicht (50 µm; 50 µm) angefahren.

Schließlich lassen sich die Korrekturwerte auch noch in Abhängigkeit weiterer Parameter, wie z. B. der Größe und/oder des Gewichtes des Probentisches, der Temperatur am Aufstellungsort, der Anzahl der Aufnahmezyklen etc. erfassen. Im erstgenannten Fall trägt die Erfindung dem Umstand Rechnung, dass ggf. unterschiedliche und auswechselbare Probentische zum Einsatz kommen und dementsprechend je nach gewähltem Probentisch und dessen Gewicht eine Korrektur vorgenommen werden muss. Außerdem mag sich die Temperatur am Aufstellungsort auf die Korrekturwerte auswirken, was mit Hilfe eines zusätzlichen Temperatursensors Berücksichtigung finden kann. Schließlich spielt auch die Anzahl der Aufnahmezyklen, d. h. letztlich das "Alter" der Vorrichtung und die Einsatzhäufigkeit eine Rolle, wenn es darum geht, das mechanische Spiel auszugleichen.

Unter dem Strich wird in der Steueranlage also ein ganzes Bündel an Korrekturmatrizen abgelegt, und zwar jeweils eine für jede denkbare Geschwindigkeit der Antriebsvorrichtung für die Stelleinheit, jeweils eine für jede denkbare Richtung der betreffenden Antriebsvorrichtung, jeweils eine Korrekturmatrix für jede Abbildungseinheit bzw. jedes Mikroskopobjektiv, jeweils eine für den ausgewählten Probentisch etc.

Wenn nun mit Hilfe der Steueranlage die Geschwindigkeit für die Antriebsvorrichtung der Verstelleinheit und deren Richtung vorgewählt wird sowie der Probentisch eingegeben ist und die gewünschte Abbildungseinheit bzw. das gewählte Mikroskopobjektiv festliegt, kann die Steueranlage die zu den vorgegebenen Parametern gehörigen Korrekturmatrizen auswählen. Aus diesen einzelnen Korrekturmatrizen wird nun eine Gesamtkorrekturmatrix abgeleitet. Das geschieht im einfachsten Fall dadurch, dass die Korrekturwerte jeweils addiert werden.

Beispielsweise ist im obigen Fall mit dem Korrekturwert (-1 µm; -5 µm) bei einem Wechsel auf ein anderes Mikroskopobjektiv damit zu rechnen, dass sich an der betreffenden Stelle (50 µm; 50 µm) ergänzende Korrekturwerte (-3 µm; +2 µm) ergeben. Daraus resultiert dann ein Gesamtkorrekturwert von (-1 µm +(-3 µm); -5 µm +2 µm) entsprechend (-4 µm; -3 µm). Dieser Gesamtkorrekturwert wird nun von der Steueranlage berücksichtigt, wenn die Verstelleinheit die gewünschte Position (50 µm; 50 µm) unter Berücksichtigung der "neuen" Abbildungseinheit anfahren soll. Denn in Wirklichkeit wird die Verstelleinheit nun "nur" zum Punkt (46 µm; 47 µm) bewegt.

Als Spindeltrieb für die Antriebsvorrichtung der Verstelleineinheit schlägt die Erfindung regelmäßig die Verwendung von Kugelumlaufspindeltrieben vor. Diese eignen sich besonders für lange Verfahrwege und zeichnen sich durch hohe Steifigkeit aus, was auch durch den Einbau mit Vorspannung begünstigt wird.

Im Ergebnis werden eine Vorrichtung zur optischen Abtastung einer Probe sowie ein zugehöriges Arbeitsverfahren zur Verfügung gestellt, mit deren Hilfe mechanisches Spiel bei der Probenabtastung ausgeglichen werden kann. Das geschieht dadurch, dass vor der eigentlichen Probenabtastung Korrekturwerte aufgenommen sowie in der Steueranlage abgelegt und beim Stellvorgang berücksichtigt werden. Grundsätzlich kann der Korrekturausgleich aber auch während der eigentlichen Probenabtastung erfolgen. Das lässt sich beispielsweise so realisieren, dass die Maske bzw. Referenz- oder Probenmaske ergänzend zu der Probe mit durchleuchtet wird. Im einfachsten Fall gelingt dies dadurch, dass man die Probe beispielsweise auf einer Seite eines Objektträgers befestigt, während die gegenüberliegende Seite die Proben- oder Referenzmaske trägt. Dadurch kann während des Probenabtastvorganges gleichzeitig die gewünschte Korrektur vorgenommen werden.

So oder so ermöglicht die Erfindung eine bisher nicht gekannte Präzision bei der Aufnahme der Einzelbilder, die folglich problemlos zu dem Gesamtbild zusammengesetzt werden können. Das kann Stoß an Stoß oder auch mit Überlapp geschehen. Hierin sind die wesentlichen Vorteile zu sehen.

Im Folgenden wird die Erfindung anhand einer lediglich ein Ausführungsbeispiel darstellenden Zeichnung näher erläutert; es zeigen:

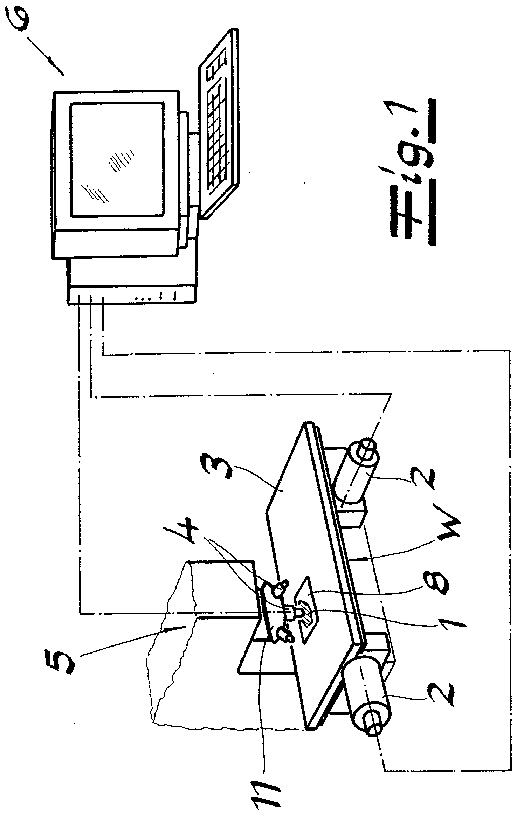

- Fig. 1: die erfindungsgemäße Vorrichtung in perspektivischer Ansicht;
- Fig. 2: den Gegenstand nach Fig. 1 schematisch,
- Fig. 3: die erfindungsgemäße Vorrichtung, reduziert auf die Abtasteinrichtung und die Verstelleinheit,
- Fig. 4: den Korrekturvorgang schematisch und
- Fig. 5: Details der Verstelleinheit bzw. der zugehörigen Antriebsvorrichtung.

In den Figuren ist eine Vorrichtung zur optischen Abtastung einer Probe 1 dargestellt. Bei dieser Probe 1 handelt es sich nicht einschränkend um einen Schnitt durch ein biologisches Gewebe oder einen Werkstoff. Dabei wird der Schnitt so ausgeführt, dass die Probe 1 von einer Weißlichtquelle W durchleuchtet und ihr Bild aufgenommen werden kann. Zu diesem Zweck verfügt die Vorrichtung in ihrem grundsätzlichen Aufbau über eine Verstelleinheit 2, 3 sowie eine Abtasteinrichtung 4, 5.

Im Einzelnen setzt sich die Verstelleinheit 2, 3 im Rahmen des Ausführungsbeispiels aus zwei Spindeltrieben 2 als Antriebsvorrichtung 2 sowie einem Probentisch 3 zusammen. Unterhalb des Probentisches 3 ist die Weißlichtquelle W angeordnet, so dass das Bild der Probe 1 von der darüber angeordneten Abtasteinrichtung 4, 5 aufgenommen werden kann. Die Abtasteinrichtung 4, 5 fasst mehrere Abbildungseinheiten bzw. Mikroskopobjektive 4 und eine Aufzeichnungseinheit bzw. einen Flächensensor respektive einen CCD-Chip 5 zusammen. Mittels der Verstelleinheit 2, 3 wird die Probe 1 gegenüber der Abtasteinrichtung 4, 5 bewegt. Dazu wird die Verstelleinheit 2, 3 von einer Steueranlage 6 beaufschlagt. Im Rahmen des dargestellten Beispiels wird der Probentisch 3 lediglich in X- und Y-Richtung bewegt, wenngleich die Verstelleinheit 2, 3 grundsätzlich auch zusätzlich in Höhen- oder Z-Richtung verstellt werden könnte, was jedoch nicht dargestellt ist.

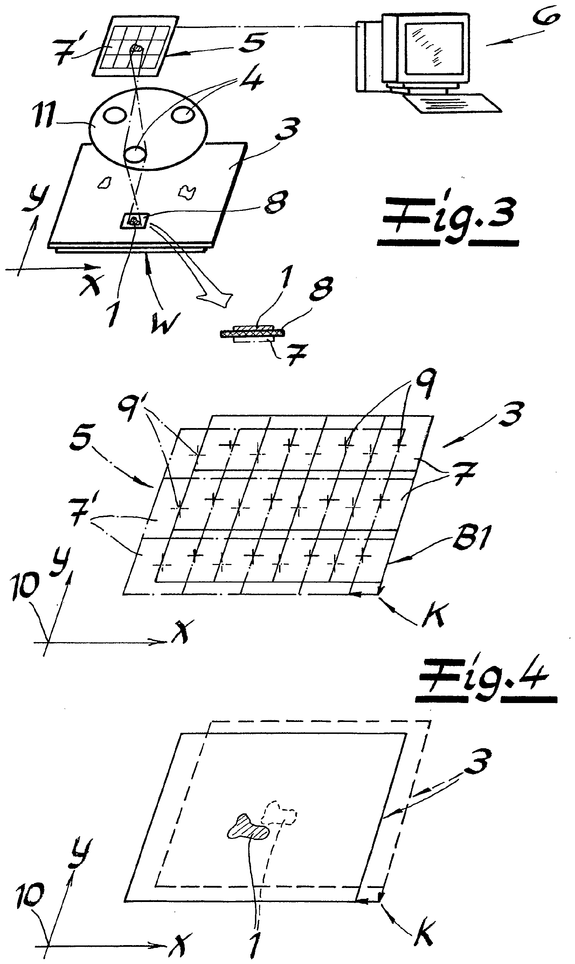

Erfindungsgemäß werden nun zum mechanischen Spielausgleich der Verstelleinheit 2, 3 Korrekturwerte K aufgenommen sowie in der Steueranlage 6 abgelegt und beim Stellvorgang berücksichtigt. Mit Hilfe des Stellvorganges wird die Probe 1 unter Berücksichtigung von insgesamt zwölf Einzelbildern im Beispielfall abgetastet (vgl. Fig. 4). Von den 12 Einzelbildern ist aus Gründen der Deutlichkeit nur ein Einzelbild B1 gekennzeichnet. Jedenfalls werden die zwölf Einzelbilder im Sinne eines Rasters in der Steueranlage 6 zu einem Gesamtbild zusammengesetzt. Um dies problemlos zu bewerkstelligen bzw. etwaige Abweichungen der Positionen der Einzelbilder im Gesamtbild zueinander durch mechanisches Spiel innerhalb der dargestellten Vorrichtung auszugleichen, werden die beschriebenen Korrekturwerte K aufgenommen.

Das geschieht, indem anstelle oder gleichzeitig mit der Probe 1 eine in Fig. 4 angedeutete Maske bzw. Referenzmaske 7 abgetastet wird. Im Beispielfall ist die Probe 1 auf einen Objektträger 8 oberseitig aufgebracht worden, wie die vergrößerte Darstellung in Fig. 3 deutlich macht. Die Unterseite des Objektträgers 8 trägt demgegenüber die Maske 7. Bei dieser Maske bzw. Referenzmaske 7 handelt es sich nicht einschränkend um eine Lithografiemaske, wie sie aus der Halbleiterherstellung bekannt ist. Eine solche Maske 7 verfügt über ein oder mehrere Markierungen 9 (vgl. Fig. 4).

Im Beispielfall ist jeweils eine Markierung 9 zentral, d. h. in der Bildmitte, im Vergleich zu dem jeweils aufzunehmenden Einzelbild vorgesehen. Selbstverständlich können ebenso mehrere Markierungen 9, auch an anderer Stelle, angeordnet werden und es kann die Anzahl der Markierungen 9 eine Variation erfahren. So oder so verfügt die Markierung 9 im Beispielfall über eine definierte Lage (X = 50 µm; Y = 50 µm) im Vergleich zu einem Referenzpunkt 10, welcher den Ursprung des X-/Y-Koordinatensystems bildet. D. h., jede Position der jeweiligen Markierung 9 im Vergleich zu diesem Referenzpunkt bzw. Ursprung 10 wird durch definierte X-/Y-Koordinaten festgelegt. Im Rahmen des Ausführungsbeispiels fällt der Ursprung 10 und folglich das Koordinatensystem der Maske bzw. Referenzmaske 7 mit demjenigen des Gesamtbildes zusammen, welches aus den zwölf Einzelbildern besteht.

In der Fig. 4 wird nun der Korrekturvorgang schematisch erläutert. Die "wahre" Lage der Maske 7 im Vergleich zu ihrem Koordinatensystem mit dem Ursprung 10 ist durchgezogen dargestellt. Dagegen korrespondiert das gemessene tatsächliche Bild der Referenzmaske 7 zu der strichpunktierten Darstellung. Die zugehörigen Bildpunkte der Markierungen 9 sind dabei ebenso wie die Referenzmaske 7 durch ein ' gekennzeichnet. Dass das Bild der Referenzmaske 7 - gekennzeichnet durch das Bezugszeichen 7' - von einem CCD-Chip 5 aufgenommen wird, erklärt auch der strichpunktierte Pfeil an dieser Stelle. Um die bildliche Darstellung nicht unnötig zu verkomplizieren, wird im Beispielfall der Fig. 4 angenommen, dass sämtliche zwölf Einzelbilder bzw. die zwölf einzelnen Markierungen 9 der Referenzmaske 7 nur einen einzigen Korrekturwert K erfordern. D. h., die Fig. 4 unterstellt, dass jedes der zwölf Einzelbilder beim Erfassen der Referenzmaske 7 eine gleichbleibende Abweichung erfährt, die mit nur einem einzelnen Korrekturwert K ausgeglichen werden kann.

Das Bild der Maske bzw. Referenzmaske 7 - gekennzeichnet durch das Bezugszeichen 7' - wird nun von der dargestellten Vorrichtung erfasst, indem die jeweils zugehörigen Einzelbilder zu dem Gesamtbild entsprechend der obigen Darstellung in Fig. 4 in der Steueranlage 6 zusammengesetzt werden bzw. die Position der abgebildeten Maske 7' im Vergleich zum CCD-Chip 5 mit Hilfe der Steueranlage 6 ausgewertet wird. D. h. die Maske 7 wird mit Hilfe der Abbildungseinheit bzw. des Mikroskopobjektives 4 auf dem Sensor bzw. Flächensensor 5 abgebildet und erzeugt hier das Bild der Maske 7'. Bei diesem Vorgang entspricht jedes Einzelbild in der Sensorebene von seiner Größe her im Wesentlichen den Abmessungen des an dieser Stelle realisierten CCD-Chips 5.

Jedes Einzelbild wird nun von der Steueranlage 6 aus dem CCD-Chip 5 ausgelesen und in einem Speicher der Steueranlage 6 abgelegt sowie an seinem Platz im Raster des Gesamtbildes platziert. Um nun mechanische Ungenauigkeiten auszugleichen, wird die Lage der einzelnen abgebildeten Markierungen 9' mit der tatsächlichen Position der jeweiligen Markierung 9 im Vergleich zum Referenzpunkt bzw. Ursprung 10 in Beziehung gesetzt. Das drückt die Fig. 4 aus. Man erkennt, dass mechanische Ungenauigkeiten dazu führen, dass die jeweils abgebildete Markierung 9' (strichpunktiert im oberen Teil der Fig. 4 dargestellt) eine geringfügig andere Position als die (durchgezogen dargestellte) Markierung 9 im Originalbild besitzt.

Diese Abweichung kann ermittelt und als Korrekturwert K quantifiziert werden. Denn der CCD-Chip 5 verfügt über die bereits angesprochenen schachbrettartig angeordneten Pixel mit bekannter und festgelegter Position in X- und Y-Ebene, d. h. in seiner Sensorebene. Unter Berücksichtigung der durch die Abbildungseinheit bzw. das Mikroskopobjektiv 4 vorgegebenen Vergrößerung lässt sich nun auf die Abweichung der jeweils abgebildeten Markierung 9' von der ursprünglichen Markierung 9 in der Maske 7 rückschließen. Dabei führt jede Abweichung zu einem X-/Y-Korrekturwert K, wie er einleitend bereits angegeben worden ist.

Im Beispielfall ist nur ein einziger Korrekturwert K in der Fig. 4 dargestellt. In der Realität wird jedoch für jedes Einzelbild B1, B2, ... B12 ein eigener Korrekturwert K₁, K₂, ... K₁₂ aufgenommen und erfasst. Das ist jedoch aus Gründen der Deutlichkeit nicht dargestellt. Jedenfalls weicht die abgebildete Markierung 9' im Vergleich zu der zugehörigen ursprünglichen "wahren" Markierung 9 in X-Richtung um -1 µm im Beispielfall ab, während die Y-Richtung eine Abweichung von -5 µm aufweist, was durch die jeweils mit K gekennzeichneten zugehörigen Pfeile (stark und nur schematisch vergrößert) dargestellt ist. Dabei ist die Lage der wahren Markierung 9 durch die Anbringung auf dem Probentisch 3 und die damit vorgenommene Festlegung des Koordinatensystems für die Maske 7 und folglich das Gesamtbild vorgegeben.

Unter Berücksichtigung dieser Prämissen lässt sich für jede ursprüngliche Markierung 9 ein zugehöriger Korrekturwert K mit entsprechenden X-/Y-Werten ermitteln und in der Steueranlage 6 ablegen. Tatsächlich wird man für jedes Einzelbild B1, B2, ... B12, einen eigenen Korrekturwert K₁, K₂, ... K₁₂ definieren und in der Steueranlage 6 aufnehmen. Dadurch wird jedes Einzelbild B1, B2, ... B12 mit einem spezifischen Korrekturwert K₁, K₂, ... K₁₂ flankiert. - Selbstverständlich kann theoretisch auch mit mehreren Korrekturwerten K je Einzelbild gearbeitet werden. In der Regel greift man jedoch auf einen einzigen Korrekturwert K pro Einzelbild zurück. Mit Hilfe dieses Korrekturwertes K wird nun die Lage des Probentisches 3 vor der Aufnahme der Probe 1 mit Hilfe des CCD-Chips 5 korrigiert. Die ursprüngliche Lage der Probe 1 vor der Korrektur sowie die zugehörige Position des Probentisches 3 ist in Fig. 4 unten gestrichelt dargestellt, wohingegen die Position des Probentisches 3 und mithin der Probe 1 nach der Korrektur eine durchgezogene Kennzeichnung in der Fig. 4 unten erfahren hat.

Man erkennt, dass bei der Aufnahme des zugehörigen Einzelbildes der hierzu korrespondierende Korrekturwert K bewirkt, dass der Probentisch 3 eine entsprechende Verstellung erfährt bzw. anstelle in die gestrichelte Sollposition (im Beispiel 50 µm; 50 µm) in die Stellung (49 µm; 45 µm) verfährt. Dadurch erfährt auch die Probe 1 eine entsprechende Verschiebung, die die zuvor ermittelten mechanischen Ungenauigkeiten kompensiert, so dass das Bild der Probe 1 bei der anschließenden Aufnahme am korrekten Ort auf dem Sensor 5 zu liegen kommt.

Wenn im Beispielfall mit mehr als einer Markierung 9 gearbeitet wird, so kann selbstverständlich zwischen den einzelnen Markierungen 9 interpoliert bzw. extrapoliert werden, um den gewünschten Korrekturwert K für das Einzelbild festzulegen. D. h., für das Zentrum jedes Einzelbildes wird ein bestimmter Korrekturwert K in X- und Y-Richtung ermittelt.

Das führt dazu, dass bei der Aufnahme der Probe 1 beispielsweise das Einzelbild B1 in der Fig. 4 oben mit dem angegebenen Korrekturwert K (-1 µm; -5 µm) in X-respektive Y-Richtung korrigiert werden muss. Das nimmt die Steueranlage 6 vor, indem die Verstelleinheit 2, 3 in X-Richtung nur 49 µm bewegt wird und eine Verstellung in Y-Richtung um 45 µm erfährt, um das Einzelbild nachher mit der richtigen Position des Zentrums (50 µm; 50 µm) in der Steueranlage 6 ablegen zu können. Dieser Prozess wird für jedes Einzelbild wiederholt, so dass anschließend die Einzelbilder richtig im Raster zum Gesamtbild zusammengefügt werden. Das setzt natürlich voraus, dass zunächst dafür gesorgt wird, dass der jeweilige Ursprung bzw. Nullpunkt 10 von einerseits der Probe 1 und andererseits dem Gesamtbild in der Steueranlage 6 und ebenso von der Maske 7 und deren Bild 7' zur Deckung gebracht werden.

Die beschriebenen Korrekturwerte K lassen sich in Abhängigkeit von der Geschwindigkeit und/oder Richtung der Antriebsvorrichtung 2 für die Verstelleinheit 2, 3 erfassen. Daraus resultieren ein oder mehrere geschwindigkeitsabhängige und/oder richtungsabhängige Korrekturmatrizen, wie einleitend bereits beschrieben wurde. Ebenso können optional mehrere Abbildungseinheiten 4 genauso wie verschiedene Probentische 3 zum Einsatz kommen. Dazu verfügt die Abtasteinrichtung 4, 5 über mehrere Mikroskopobjektive 4, die in einem von der Steueranlage 6 beaufschlagten Objektivrevolver 11 aufgenommen werden. Auf diese Weise erhält die Steueranlage 6 unmittelbar eine Rückmeldung über das jeweils im Einsatz befindliche Mikroskopobjektiv 4 und kann folglich auf die zugehörige Korrekturmatrix - falls erforderlich - zurückgreifen.

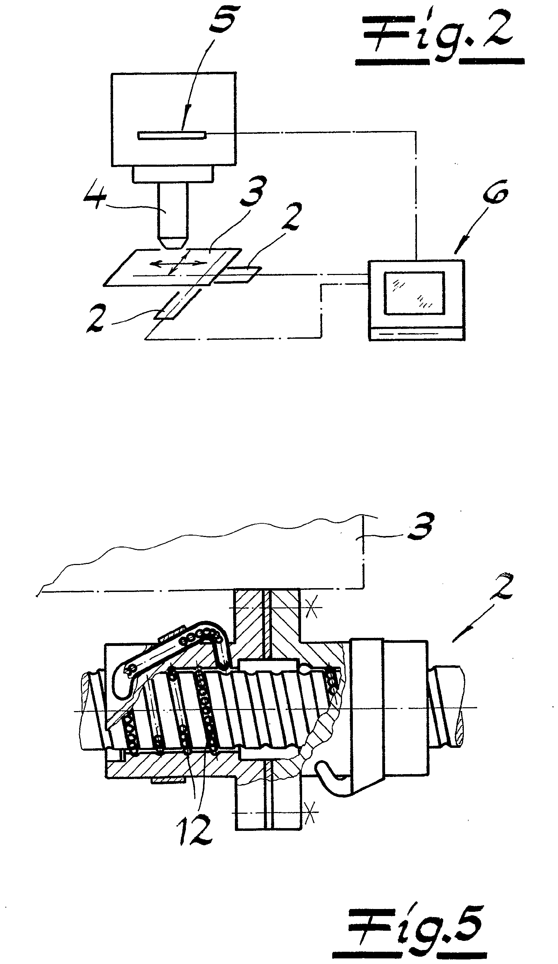

Die Verstelleinheit 2, 3 bzw. die zugehörige Antriebsvorrichtung 2 weist zwei Spindeltriebe 2 auf, die als Kugelumlaufspindeltriebe 2 ausgebildet sind. Die Spindeltriebe 2 sind jeweils orthogonal zueinander angeordnet und sorgen für die Verstellung des Probentisches 3 und mithin der Probe 1 in X-Richtung respektive Y-Richtung. Details des jeweiligen Kugelumlaufspindeltriebes 2 sind in der Fig. 5 dargestellt. Man erkennt, dass einzelne Kugeln 12 im Umlauf geführt werden.

Die Steueranlage 6 sorgt insgesamt dafür, dass die Verstelleinheit 2, 3 und mit ihr die Probe 1 die gewünschte Position zur Aufnahme des Einzelbildes bei der Aufnahme einnimmt. Im Anschluss daran wird das Einzelbild von dem CCD-Chip 5 erfasst und in der Steueranlage 6 im Raster des Gesamtbildes an seiner Position abgelegt. Durch den vorgeschalteten oder gleichzeitigen Vorgang des mechanischen Spielausgleiches und der Aufnahme der Korrekturwerte K "weiß" die Steueranlage 6 nun, dass zu dem zugehörigen und aufgenommenen Einzelbild ein bestimmter Korrekturwert K (X;Y) korrespondiert. - Dadurch lässt sich insgesamt ein mechanischer Spielausgleich realisieren, der letztlich auf elektronischem Wege funktioniert, so dass auch preiswerte Verstelleinheiten 2, 3 ohne weiteres Verwendung finden können.

Aufnahme einnimmt. Im Anschluss daran wird das Einzelbild von dem CCD-Chip 5 erfasst und in der Steueranlage 6 im Raster des Gesamtbildes an seiner Position abgelegt. Durch den vorgeschalteten oder gleichzeitigen Vorgang des mechanischen Spielausgleiches und der Aufnahme der Korrekturwerte K "weiß" die Steueranlage 6 nun, dass zu dem zugehörigen und aufgenommenen Einzelbild ein bestimmter Korrekturwert K (X;Y) korrespondiert. - Dadurch lässt sich insgesamt ein mechanischer Spielausgleich realisieren, der letztlich auf elektronischem Wege funktioniert, so dass auch preiswerte Verstelleinheiten 2, 3 ohne weiteres Verwendung finden können.

## Patentansprüche

1. Verfahren zur optischen Abtastung einer Probe (1) mittels wenigstens einer Verstelleinheit (2, 3) mit Abtastvorrichtung (2) sowie Probentisch (3), und einer Abtasteinrichtung (4, 5),
wobei unterhalb des Probentisches (3) eine Weißlichtquelle (W) angeordnet wird und die Probe (1) durchleuchtet, so dass das Bild der Probe (1) von der darüber angeordneten Abtasteinrichtung (4, 5) aufgenommen wird,
wonach die Probe (1) mit Hilfe der von einer Steueranlage (6) beaufschlagten Verstelleinheit (2, 3) gegenüber der Abtasteinrichtung (4, 5) bewegt wird, oder umgekehrt, und
wonach mit Hilfe der Abtasteinrichtung (4, 5) Einzelbilder der Probe (1) aufgenommen und im Anschluss daran in der Steueranlage (6) zu einem Gesamtbild zusammengesetzt werden,
**dadurch gekennzeichnet, dass**
zum Ausgleich mechanischer Unzulänglichkeiten in der Verstelleinheit (2,3) und/oder der Abtasteinrichtung (4, 5) Korrekturwerte (K) mit Hilfe einer anstelle oder zusätzlich zu der Probe (1) abgetasteten Maske (7) mit definierten Markierungen (9) aufgenommen werden, wobei
die Korrekturwerte (K) entweder werksseitig vor der eigentlichen Inbetriebnahme der Vorrichtung oder vor oder bei jedem einzelnen Messvorgang aufgenommen und in der Steueranlage (6) abgelegt sowie beim Stellvorgang berücksichtigt werden, wobei weiter
mit Hilfe der Korrekturwerte (K) die Verstelleinheit (2, 3) beim Anfahren und der Aufnahme des jeweiligen Einzelbildes der Probe (1) in ihrer zugehörigen Position korrigiert wird, wobei weiter
für jedes Einzelbild ein eigener Korrekturwert (K) aufgenommen und erfasst wird sowie die Korrekturwerte (K) in einer ein- oder mehrdimensionalen Korrekturmatrix abgelegt werden, und wobei
Zwischenwerte durch Extrapolation definiert werden.

2. Verfahren nach Anspruch 1, **dadurch gekennzeichnet, dass** die Maske (7) als Lithografiemaske ausgebildet ist.

3. Verfahren nach Anspruch 1 oder 2, **dadurch gekennzeichnet, dass** die Korrekturwerte (K) in Abhängigkeit von der Geschwindigkeit und/oder Richtung einer Antriebsvorrichtung (2) der Verstelleinheit (2, 3) erfasst oder ein oder mehrere geschwindigkeitsabhängige und/oder richtungsabhängige Korrekturmatrizen aufgenommen werden.

4. Verfahren nach einem der Ansprüche 1 bis 3, **dadurch gekennzeichnet, dass** die Abtasteinrichtung (4, 5) mit mehreren Abbildungseinheiten (4) und/oder Aufzeichnungseinheiten (5) ausgerüstet wird.

5. Verfahren nach einem der Ansprüche 1 bis 4, **dadurch gekennzeichnet, dass** je nach Wahl der Abbildungseinheit (4) und/oder Aufzeichnungseinheit (5) zugehörige Korrekturwerte (K) ermittelt und in der Steueranlage (6) abgelegt werden.

6. Verfahren nach einem der Ansprüche 1 bis 5, **dadurch gekennzeichnet, dass** die Korrekturwerte (K) zusätzlich noch in Abhängigkeit weiterer Parameter, wie z. B. Größe und/oder Gewicht eines Probentisches (3), Temperatur am Aufstellungsort, Anzahl der Aufnahmezyklen etc. erfasst und diese berücksichtigt werden.

7. Verfahren nach einem der Ansprüche 1 bis 6, **dadurch gekennzeichnet, dass** die Verstelleinheit (2, 3) als X-/Y-Verstelleinheit (2, 3) ausgebildet ist und wenigstens zwei Spindeltriebe (2) als jeweilige Antriebsvorrichtung (2) aufweist.

8. Verfahren nach einem der Ansprüche 1 bis 7, **dadurch gekennzeichnet, dass** die Abtasteinrichtung (4, 5) zumindest ein Mikroskopobjektiv (4) als Abbildungseinheit (4) und einen Sensor, z. B. Flächensensor (5), als Aufzeichnungseinheit (5) zur Bildaufzeichnung aufweist.

## Claims

1. A method for optically scanning a sample (1) by means of least one adjustment unit (2, 3), having a scanning device (2) as well as a sample table (3), and having a scanning device (4, 5),
wherein a white-light source (W) is disposed underneath the sample table (3) and transilluminates the sample (1), so that the image of the sample (1) is recorded by the scanning device (4, 5) disposed thereabove,
whereupon the sample (1) is moved relative to the scanning device (4, 5) by means of the adjustment unit (2, 3) activated by a control system (6), or vice versa, and
whereupon individual images of the sample (1) are taken using the scanning device (4, 5), and subsequent to this, are combined in the control system (6) to form a total image,
**characterized in that**
correction values (K) are incorporated for compensation of mechanical insufficiencies of the adjustment unit (2, 3) and/or the scanning device (4, 5), using a mask (7) scanned in place of or in addition to the sample (1) and having defined markings (9), wherein
the correction values (K) are incorporated either at the factory prior to the actual start-up of the device or prior of or during each individual measuring process and are stored in the control system (6) as well as taken into consideration during the adjusting process, wherein further
the adjustment unit (2, 3), when starting and capturing the respective individual image of the probe (1), is corrected in its associated position by means of the correction values (K), wherein further
a separate correction value (K) is incorporated and acquired for each individual image and the correction values (K) are stored in a one- or multi-dimensional correction matrix, and wherein
intermediate values are defined by extrapolation.

2. The method according to claim 1, **characterized in that** the mask (7) is configured as a lithography mask.

3. The method according to claim 1 or 2, **characterized in that** the correction values (K) are incorporated as a function of the speed and/or the direction of a drive device (2) of the adjustment unit (2, 3), or one or more speed-dependent and/or direction-dependent correction matrices are incorporated.

4. The method according to any one of claims 1 to 3, **characterized in that** the scanning device (4, 5) is equipped with a plurality of imaging units (4) and/or recording units (5).

5. The method according to any one of claims 1 to 4, **characterized in that** depending on the selection of the imaging unit (4) and/or recording unit (5), associated correction values (K) are determined and stored in the control system (6).

6. The method according to any one of claims 1 to 5, **characterized in that** additionally, the correction values (K) are also determined as a function of additional parameters, such as, e.g., size and/or weight of a sample table (3), temperature at the installation location, number of recording cycles, etc., and that these are taken into consideration.

7. The method according to any one of claims 1 to 6, **characterized in that** the adjustment unit (2, 3) is configured as an X/Y adjustment unit (2, 3), and has at least two spindle drive mechanisms (2) as the respective drive device (2).

8. The method according to any one of claims 1 to 7, **characterized in that** the scanning device (4, 5) has at least one microscope lens (4) as the imaging unit (4) and one sensor, e.g. surface sensor (5), as the recording unit (5) for image recording.

## Revendications

1. Procédé de balayage optique d'un échantillon (1) au moyen d'au moins une unité de réglage (2, 3), comportant un dispositif de balayage (2) et une table d'échantillons (3), et un dispositif de balayage (4, 5),
dans lequel, en dessous de la table d'échantillons (3) une source de lumière blanche (W) est disposée et l'échantillon (1) est éclairé de sorte que l'image de l'échantillon (1) soit enregistrée par le dispositif de balayage (4, 5) disposé dessus,
après quoi l'échantillon (1) est déplacé à l'aide de l'unité de réglage (2, 3) sollicitée par un système de commande (6) par rapport au dispositif de balayage (4, 5) ou inversement, et
après quoi, à l'aide du dispositif de balayage (4, 5), des photos distinctes de l'échantillon (1) sont prises puis réunies dans le système de commande (6) en une image totale,
**caractérisé en ce que**,
pour compenser les insuffisances mécaniques dans l'unité de commande (2, 3) et/ou du dispositif de balayage (4, 5), des valeurs correctives (K) sont enregistrées à l'aide d'un masque (7) balayé à la place ou en plus de l'échantillon (1) avec des marquages définis (9),
les valeurs correctives (K) étant relevées soit au niveau de la production avant la mise en marche proprement dite du dispositif ou avant ou lors de chaque opération de mesure individuelle et enregistrées dans le système de commande (6) et prises en compte lors de l'opération de réglage, sachant que, en outre,
à l'aide des valeurs correctives (K), l'unité de réglage (2, 3) est corrigée lors du démarrage et de la prise de la photo individuelle respective de l'échantillon (1) dans sa position correspondante, sachant que, en outre,
pour chaque image individuelle, une valeur corrective propre (K) est définie et enregistrée et que les valeurs correctives (K) sont enregistrées sont consignée dans une matrice de correction uni- ou multidimensionnelle, et que
des valeurs intermédiaires sont définies par extrapolation.

2. Procédé selon la revendication 1, **caractérisé en ce que** le masque (7) se présente sous forme d'un masque lithographique.

3. Procédé selon la revendication 1 ou 2, **caractérisé en ce que** les valeurs correctives (K) sont enregistrées en fonction de la vitesse et/ou du sens d'un dispositif d'entraînement (2) de l'unité de réglage (2, 3) ou d'une ou plusieurs matrices de correction dépendant de la vitesse et/ou dépendant de la direction.

4. Procédé selon une des revendications 1 à 3, **caractérisé en ce que** le dispositif de balayage (4, 5) est équipé de plusieurs unités de représentation (4) ou unités d'enregistrement (5).

5. Procédé selon une des revendications 1 à 4, **caractérisé en ce que**, en fonction du choix de l'unité de représentation (4) et/ou de l'unité d'enregistrement (5), des valeurs correctives correspondantes (K) sont déterminées et consignées dans le système de commande (6).

6. Procédé selon une des revendications 1 à 5, **caractérisé en ce que** les valeurs correctives (K) sont de plus aussi déterminées en fonction d'autres paramètres, comme par exemple la taille et/ou le poids d'une table d'échantillons (3), la température sur le lieu de mise en place, le nombre de cycles de relevés, etc. et qu'elles sont prises en compte.

7. Procédé selon une des revendications 1 à 6, **caractérisé en ce que** l'unité de réglage (2, 3) est réalisée sous forme d'une unité de réglage X/Y (2, 3) et présente au moins deux commandes à broche (2) servant de dispositifs d'entraînement respectifs (2).

8. Procédé selon une des revendications 1 à 7, **caractérisé en ce que** le dispositif de balayage (4, 5) présente au moins un objectif de microscope (4) servant d'unité de représentation (4) et un capteur, par exemple un capteur de surface (5) servant d'unité d'enregistrement (5) pour l'enregistrement d'images.
